# EUROPEAN PATENT APPLICATION

(11) **EP 1 072 993 A2**
(43) Date of publication of application: **31.01.2001**
(21) Application number: 00306240.3
(22) Date of filing: 21.07.2000
(51) Int. Cl.: G06F 17/60

(54) **Method of processing the preceding work for workflow system**

(30) Priority: 29.07.1999 JP 21463299; 25.04.2000 JP 2000128958
(71) Applicant: HITACHI, LTD., Chiyoda-ku, Tokyo (JP); HITACHI SOFTWARE ENGINEERING CO., LTD., Yokohama (JP)
(72) Inventor: Katou, Kenji, Hitachi Ltd, I.P. Group, Chiyoda-ku, Tokyo 100-8220 (JP); Tamaki, Masato, Hitachi Ltd, I.P. Group, Chiyoda-ku, Tokyo 100-8220 (JP); Tsuruta, Seiya, Hitachi Software Co. Ltd, Yokohama-shi, Kanagawa 231-0015 (JP)
(74) Representative: Calderbank, Thomas Roger

(57) **Abstract**

A workflow system provided with an advanced start activity notice work item for defining as a activity process definition the name of an activity capable of starting when an activity generation condition is satisfied, wherein when data in the system satisfies the activity generation condition, an advanced start activity notice is issued to the activity corresponding to the activity name to execute the activity.

## Description

The present invention relates to a workflow system, and more particularly to a workflow system using a workflow control method of defining the order of a plurality of activities by an activity flow and starting another activity in advance while each activity is processed.

In a conventional workflow system, activities or electronic document circulations are controlled by an activity definition which defines the order of activities or the circulation order of electronic documents. A start of each activity or a start of each circulation is initiated upon receipt of a completion notice of a previous activity or circulation.

Therefore, even an activity, which can start after an activity having a plurality of input processes enters a specific item, cannot start until all the input processes are completed. Therefore, while one activity is processed, another activity cannot start in advance.

In some conventional workflow system, definition is given so as to process a plurality of documents in parallel, and standby processes are provided so that after all processes are completed, the next process starts.

With this conventional workflow system, even an activity, which can start after a specific document is processed among the plurality of documents being processed in parallel or after a specific term of some document is entered, cannot start.

An example of the workflow system of this kind is disclosed, for example, in JP-A-9-259181.

Conventional techniques described above are associated with the following problems.

Each task or activity (as defined in the Workflow Management Coalition (WfMC) standard) is processed in a predefined order, and in response to a completion notice of the activity, the next activity starts. Therefore, even if there is an activity defined as an advanced start activity, this activity cannot start unless the preceding activity is completed.

Each worker enters a standby state until the preceding activity is completed and a turnaround time of all activities becomes very long.

In the workflow system described in JP-A-9-259181, if the advanced start activity is to be processed, work items of all activities including those which cannot start are referred to. If there are a number of items, the load of the workflow system becomes large.

In order to solve the above problems, it is an object of the present invention to shorten the total turnaround time of activities by providing the following method of starting an activity in advance when the activity start condition is met.

The invention provides a workflow system provided with an advanced start activity notice work item for defining as an activity process definition the name of an activity capable of starting when an activity generation condition is satisfied, wherein when data in the system satisfies the activity generation condition, an advanced start activity notice is issued to the activity corresponding to the activity name to execute the activity.

If the completion condition of the advanced start activity which received the advanced start activity notice, is satisfied, the advanced start activity is terminated.

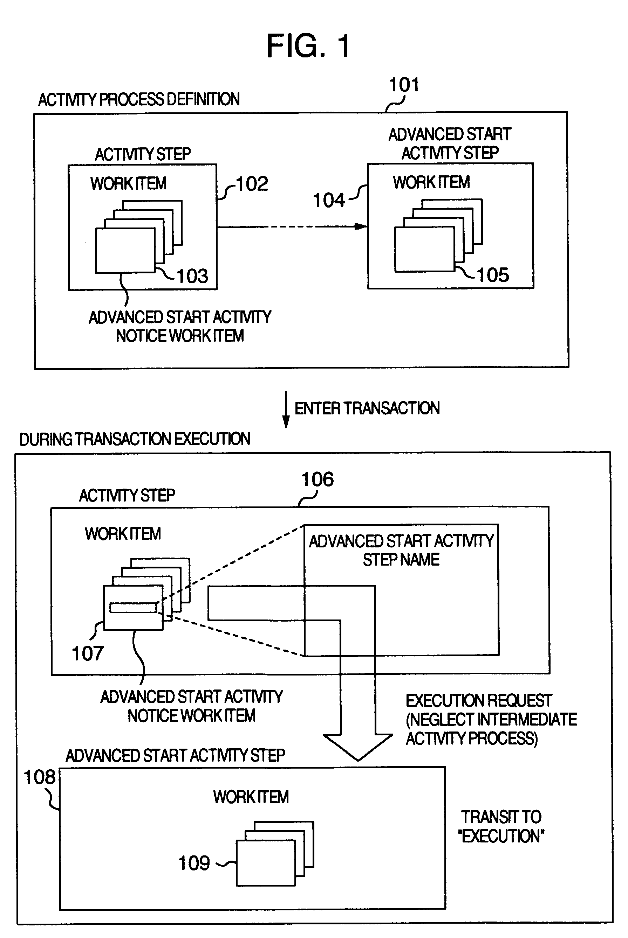

This method will be further described with reference to a conceptual diagram of Fig. 1.

An advanced start activity notice work item (advanced start activity or the like as defined in WfMC standard) 103 is a work item for executing the predefined activity step irrespective of the definition of a relation between activity steps, when the generation condition is satisfied.

The advanced start activity notice work item 103 does not influence the relation between an activity step 102 including the advanced start activity notice work item 103 and the activity step which starts upon execution of the advanced start activity notice work item 103 (hereinafter called an advanced start activity step 104).

An advanced start activity notice work item 107 is generated, similar to a normal work item, when an activity step 106 starts or a preset generation condition is satisfied. As the advanced start activity notice work item 107 is generated, its status transits to "under execution".

As the status of the advanced start activity notice work item 107 transits to "under execution", an execution request of an advanced start activity step 108 defined in the work item is generated.

As the status of a designated advanced start activity step 109 transits to "under execution", the requesting advanced start activity notice work item 107 is automatically completed.

If the advanced start activity step 108 is not still generated or it is already completed when the execution request is issued from the advanced start notice work item 107, then a new advanced start activity step 108 is generated to execute it.

If the advanced start activity step 108 whose execution request is issued by the advanced start activity notice work item 107 is already under execution, an evaluation request for the advanced start activity step 108 is notified to a workflow server. In accordance with the evaluation result, a new work item 109 is generated or the advanced start activity step 108 is completed.

A tool and a utility having means for defining these operations are provided in the workflow system.

In the drawings:
Fig. 1 is a conceptual diagram illustrating an advanced start activity processing method.
Fig. 2 is a diagram showing the overall structure according to an embodiment of the invention.
Fig. 3 is a diagram showing an example of an activity process control table.
Fig. 4 is a diagram showing an example of an activity step definition table.
Fig. 5 is a diagram showing an example of a work item definition table.
Fig. 6 is a diagram showing an example of a transition definition table.
Fig. 7 is a flow chart illustrating the operation to be executed by a workflow controller of the embodiment.
Fig. 8 illustrates activity process definition for order/delivery activities embodying the invention.
Fig. 9 shows an example of advanced start activity notice work item generating condition.
Fig. 10 shows another example of advanced start activity notice work item generating condition.
Fig. 11 is a diagram showing an example of activity process definition with an order cancel process.
Fig. 12 shows an example of a work item definition table for order/delivery activities embodying the invention.
Fig. 13 shows an example of a transition definition table for order/delivery activities embodying the invention.
Fig. 14 is a flow chart illustrating the operation to be executed by a workflow controller for order/delivery activities embodying the invention.
Fig. 15 is a flow chart illustrating the cancel process.

Embodiments of the invention will be described with reference to the accompanying drawings.

A flow of activities in a workflow system is determined by an activity process definition in a workflow server. Each activity is executed in accordance with the order of activities defined by the activity process definition. An activity is a set of work items to be executed under a certain condition, and a work item is a specific process to be actually executed by a worker or a computer.

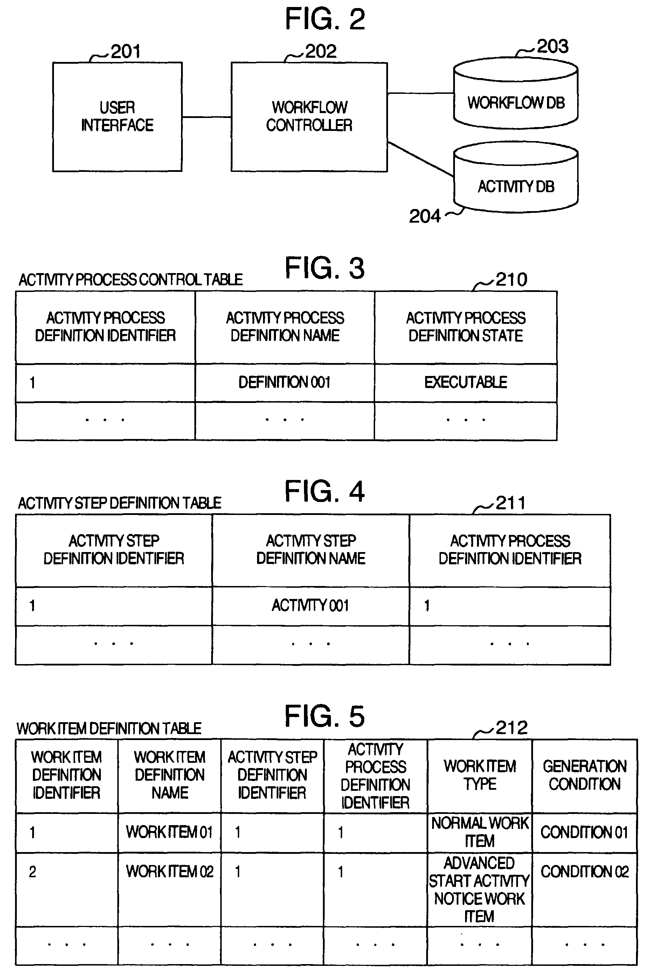

As shown in Fig. 2, the overall structure of an embodiment is constituted of a user interface unit 201, a workflow controller 202 including a workflow monitor and a workflow judging unit, a workflow DB 203 and an activity DB 204 for storing a list of customer names, product names or the like.

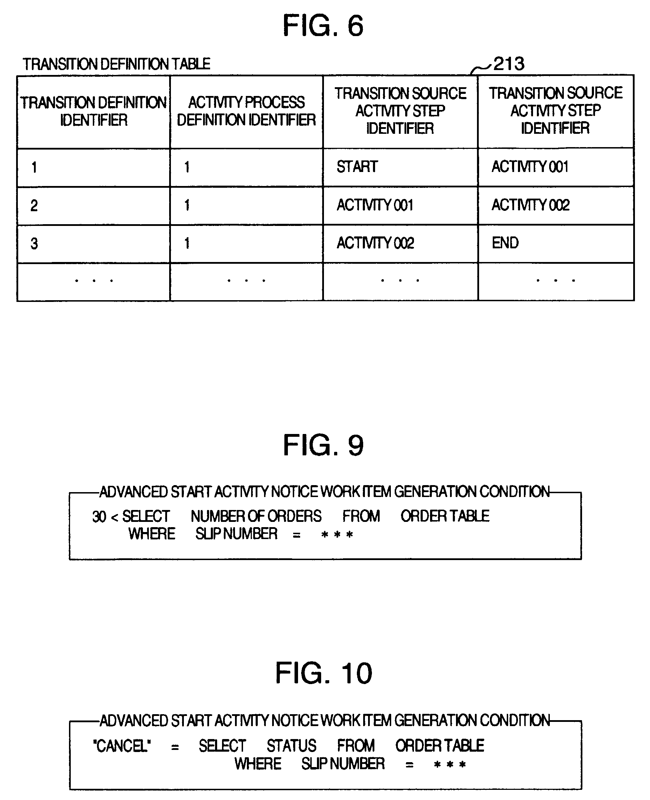

The workflow DB is constituted of a activity process control table 210 shown in Fig. 3, an activity step definition table 211 shown in Fig. 4, a work item definition table 212 shown in Fig. 5, and a transition definition table 213 shown in Fig. 6.

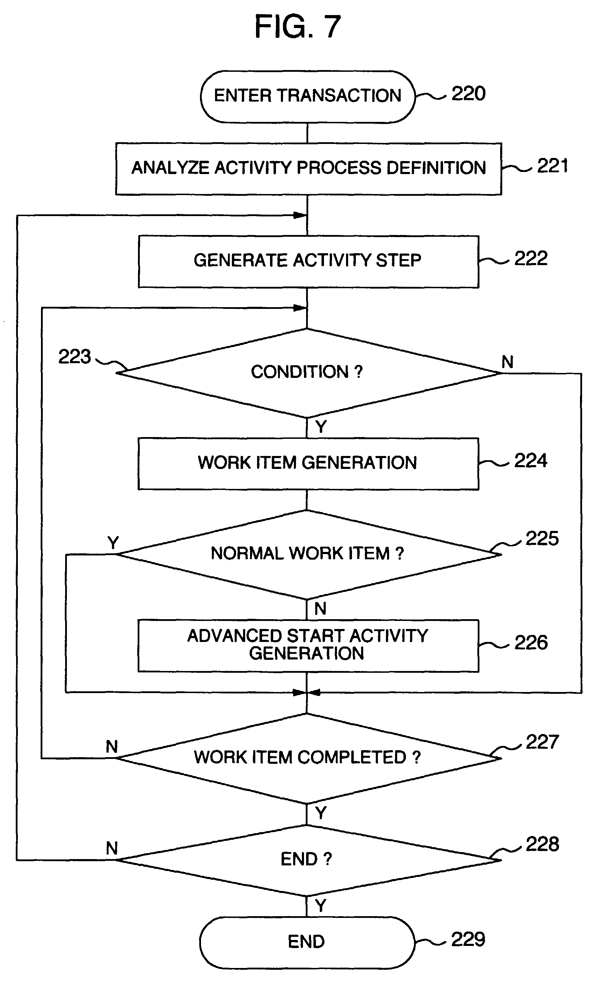

A flow chart illustrating the operation to be executed by the workflow controller 202 is shown in Fig. 7.

At Step 220 a transaction is entered from the user interface 201.

At Step 221 a designated activity process definition identifier is searched from the activity process control table 210 to use it thereafter for execution of the succeeding processes. Next, an activity step to be generated after the transaction was entered, is searched from the activity step definition table 211.

After the activity step to be generated is searched from the activity step definition table, an activity 001 is generated and starts at Step 222.

Next, at Step 223 work items related to the activity 001 are searched from the work item definition table 212, and the generation condition of the corresponding work item definition is evaluated. In this example, work items related to the activity 001 are a work item 01 and a work item 02. Of these work items, those satisfying the generation condition are generated and start at Step 224.

At Step 224 the work item 01, work item 02 or both the work items 01 and 02 are generated and start to thereafter execute Step 225.

If it is judged at Step 225 that the generated and started work item is a normal work item, the flow advances to Step 227, whereas if it is judged that the work item is an advanced start activity notice work item, the flow advances to Step 226.

If it is judged at Step 227 that the work item is still not completed, the flow returns to Step 223.

If the activity DB is updated by a user program and there is a new work item satisfying the generation condition, Step 224 is executed.

If there is no work item satisfying the generation condition, Step 227 is executed. In this manner, these processes continue to be executed until all work items of the activity 001 are completed.

If it is judged at Step 227 that all work items are completed, the flow advances to Step 228.

If it is judged at Step 228 that the activity is not still completed, then the flow returns to Step 222.

Thereafter, the advanced start activity step is executed in a manner similar to the normal activity step.

As described above, the advanced start activity notice work item is executed to define the advanced start activity. Therefore, even if the preceding activity (in this case, the activity 001) is not still completed, another designated activity can be processed in advance.

### (1) Order/delivery activity

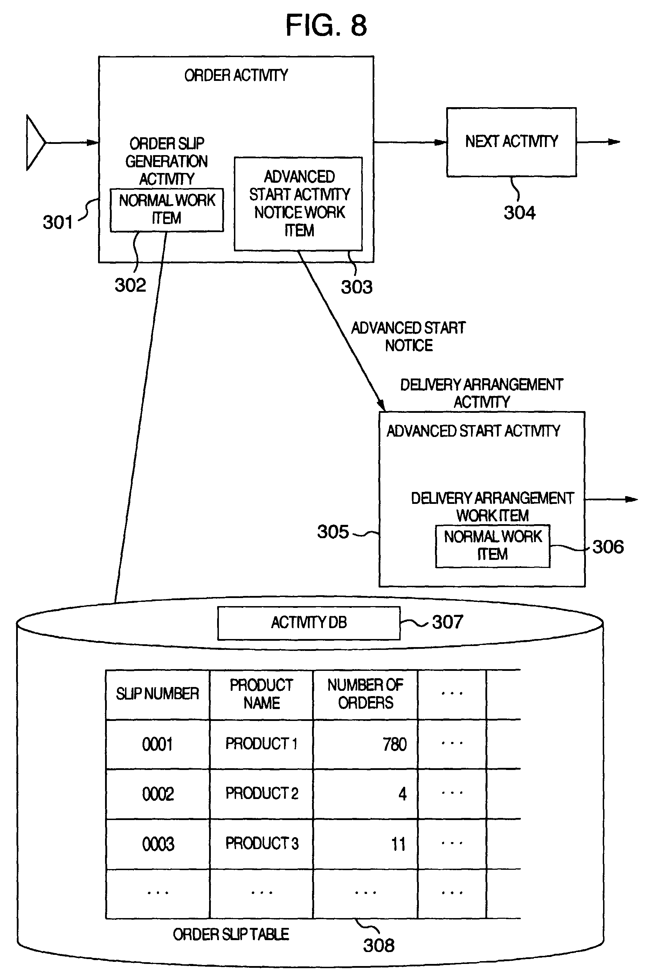

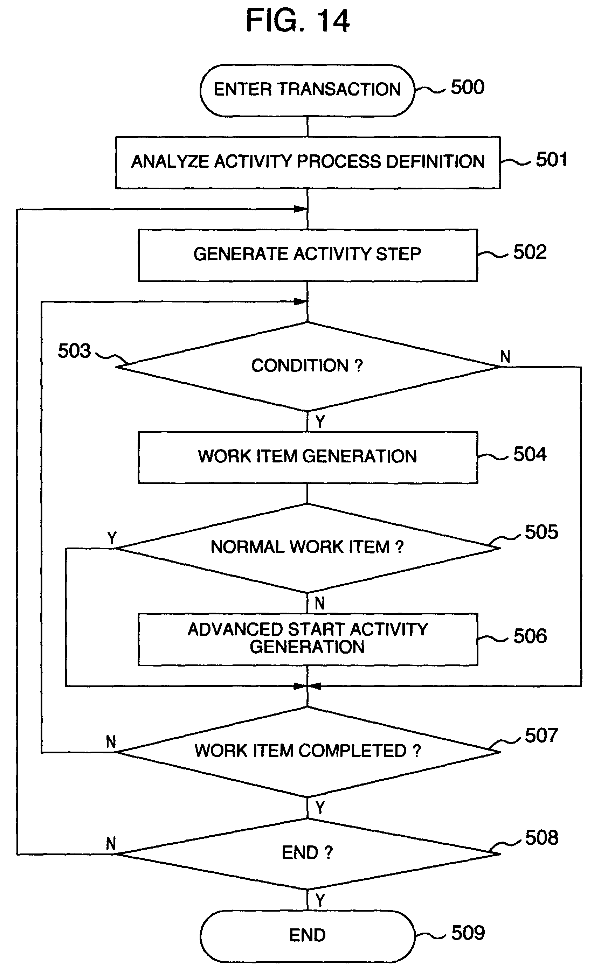

Fig. 8 illustrates a flow definition of an order/delivery activity workflow system according to an embodiment of the invention, and Fig. 14 is a flow chart illustrating the operation of the order/delivery activity workflow system.

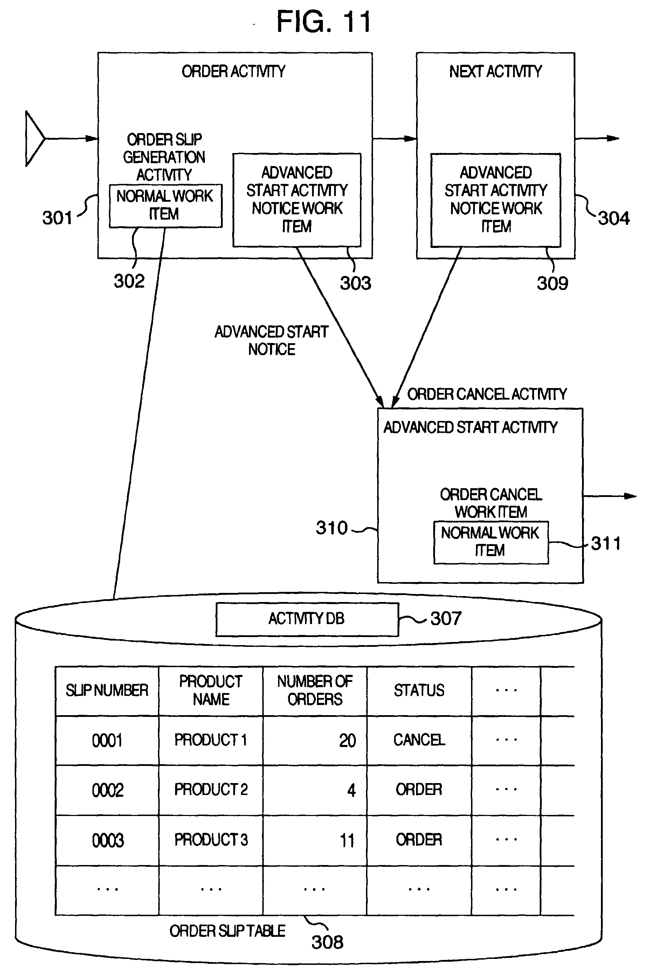

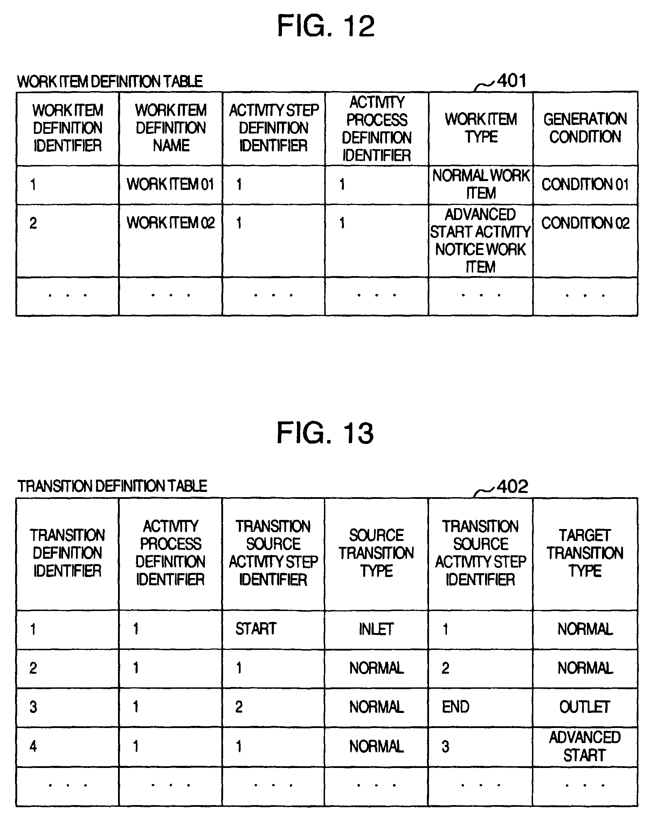

An advanced start activity notice work item generation condition for generating an advanced start activity notice work item 303 is defined in advance and stored in a work item list definition table. An example of this definition is shown in Fig. 9. An example of the work item definition table is shown in Fig. 12, which table stores a work item type to be used for discriminating between a normal work item and an advanced start activity notice work item. An example of a transition definition table is shown in Fig. 13, which table is used for defining the activity step at an advanced start activity notice destination.

If a generation condition "01" is satisfied, a work item 01 is generated and starts, whereas if a generation condition "02" is satisfied, a work item 02 is generated and starts. An example of the generation condition is shown in Fig. 9.

An advanced start activity notice work item generation condition including an SQL statement shown in Fig. 9 is an example of an advanced start activity notice work item generation condition of the order/delivery workflow system. In this case, the number of received orders is extracted from an order slip table 308 of an activity DB 307 at a record having the subject slip number. If the number of received orders is equal to or larger than 30, the advanced start activity notice work item 303 is generated and starts.

As this workflow system is initiated, at Step 500 records of a new transaction are inserted into the activity DB.

At Step 501 the activity process definition shown in Fig. 8 is analyzed to start a first order activity 301. At Step 503 the generation condition of a work item defined in the order activity 301 is evaluated. Work items satisfying this generation condition are generated and start.

At Step 504 work items satisfying the generation condition are generated. Of these work items, an order slip generation work item 302 which is a normal work item, starts, and data is written in the order table 308 of the activity DB 307.

Thereafter, at Step 505 a work item type is checked. In this case, since the work item type is a normal work item, the state of the work item is evaluated at Step 507. After the order slip generation work item 302 is completed, the generation condition is again evaluated at Step 503.

The work item of the order activity 301 is again evaluated. If the number of received orders corresponding to the subject slip number is equal to or larger than 30, the advanced start activity notice work item 303 is generated and starts at Step 504.

As the advanced start activity notice work item 303 starts, it is judged at Step 505 that the work item is not the normal work item so that at Step 506 an advanced start activity or delivery arrangement activity 305 is generated and starts. Since the advanced start activity notice work item 303 is completed, the flow advances from the judgement Step 507 to Step 508.

If it is judged at Step 508 that the order activity 301 is still not completed, Step 502 is again executed to continue the order activity 301.

The delivery arrangement activity 305 continues thereafter independently from the order activity 301.

Reevaluation of the advanced start activity notice work item generation condition may be requested from a user program.

As above, not only the activity is executed in accordance with an activity execution order described in the flow definition, but also another particular activity can be executed in advance if the specific condition is satisfied before the first activity is completed.

With this order/delivery workflow, a delivery vehicle can be arranged before the order activity is completed.

### (2) Order cancel process

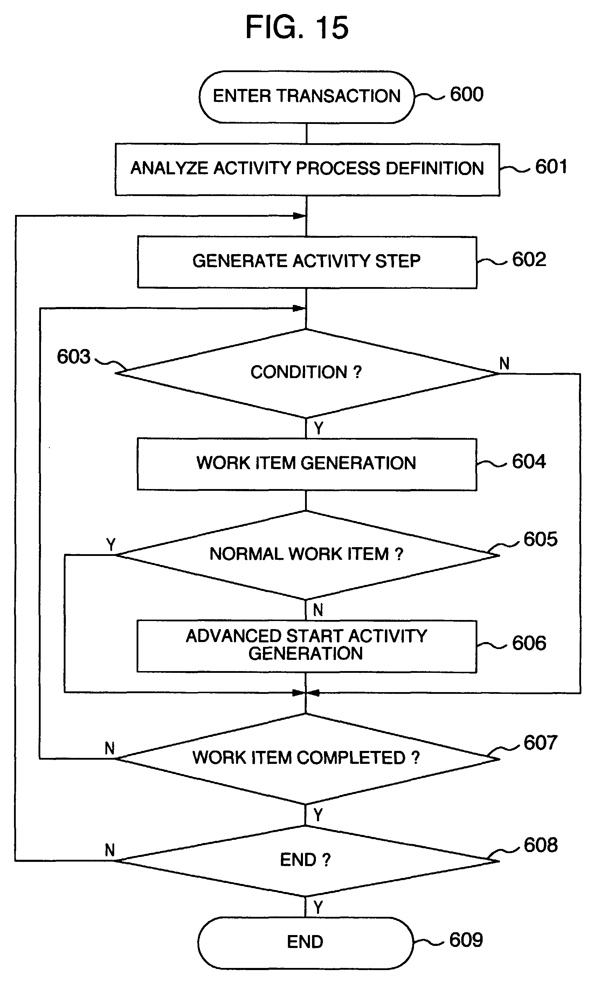

Fig. 11 illustrates activity process definition of the order cancel process for an order/delivery workflow system according to an embodiment of the invention, and Fig. 15 is a flow chart illustrating the order cancel process of the order/delivery workflow system.

The work item definition table is shown in Fig. 12, which table stores a work item type to be used for discriminating between a normal work item and an advanced start activity notice work item. An example of the transition definition table is shown in Fig. 13, which table is used for defining the activity step at an advanced start activity notice destination.

If the generation condition "01" is satisfied, the work item 01 is generated and starts, whereas if the generation condition "02" is satisfied, the work item 02 is generated and starts.

As described in (1) Order/delivery activity, the advanced start activity notice work item 303 and its related advanced start activity can be operated independently. Therefore, the following specific activity process can be executed at any time desired.

An advanced start activity notice work item generation condition to be used for generating the advanced start activity notice work item 303 is defined in advance and stored in the work item definition table.

An advanced start activity notice work item generation condition including an SQL statement shown in Fig. 10 is an example of an advanced start activity notice work item generation condition of the order/delivery workflow system. In this case, a status is extracted from the order slip table 308 of the activity DB 307 at a record having the subject slip number. If the status is "cancel", the advanced start activity notice work item 303 is generated and starts.

As this workflow system is initiated, at Step 600 records of a new transaction are inserted into the activity DB.

At Step 601 the activity process definition shown in Fig. 11 is analyzed to generate and start a first order activity 301 at Step 602. At Step 603 the generation condition of a work item defined in the order activity 301 is evaluated. Work items satisfying this generation condition are generated and start at Step 604.

Of these work items, an order slip generation work item 302 which is a normal work item, starts, and data is written in the order table 308 of the activity DB 307.

Thereafter, at step 605 a work item type is checked. In this case, since the work item type is a normal work item, the state of the work item is evaluated at step 607. After the order slip generation work item 302 is completed, the generation condition of the work item of the order activity 301 is again evaluated at Step 603.

If the status of the subject record is "cancel", the advanced start activity notice work item 303 is generated and starts at Step 604.

As the advanced start activity notice work item 303 starts, it is judged at Step 605 that the work item is not the normal work item so that at Step 606 an advanced start activity or order cancel activity 310 is generated and starts. Since the advanced start activity notice work item 303 is completed, the flow advances from the judgement step 607 to Step 608.

If it is judged at step 608 that the order activity 301 is still not completed, Step 602 is again executed to continue the order activity 301.

The order cancel activity 304 continues thereafter independently from the order activity 301.

Next, since the order cancel activity 310 is already generated at Step 602, the flow advances to Step 603. The generation condition of an order cancel work item 311 as the normal work item in the order cancel activity 310 is evaluated at Step 603. At Step 604, work items are generated and start.

As described above, the advanced start activity notice work item 303 is defined in each activity such as the order cancel activity 310 which is the advanced start activity. Accordingly, the order cancel activity can be executed when an order cancel is received from a customer during the order/delivery activity workflow.

Since the advanced start activity notice work item is defined in each activity such as the order cancel activity which is the advanced start activity, an order cancel from a customer can be received by monitoring the status of each slip in the order slip table 308 of the activity DB 307 during the execution of each activity such as a next activity 304.

Reevaluation of the advanced start activity notice work item generation condition may be requested from a user program.

As above, not only the activity is executed in accordance with an activity execution order described in the flow definition, but also another particular activity can be executed in advance if the specific condition is satisfied before the first activity is completed.

With this order/delivery workflow which defines the order cancel activity as the advanced start activity, an order cancel request can be received for the activity with a defined advanced start activity notice work item, until the started order process is completed.

According to the embodiments, even if the activity at the pre-process is delayed, the activity at the post-process can be executed in advance. Such delay may be a delay of some activities at the pre-process to be caused by the activity process definition. In this case workers cannot process activities at the post-process. Alternatively, such delay may be a delay of activities at the post-process which delay shortens the limited activity period at the post-process.

Even it the activity at the pre-process is not yet completed, a specific activity can be executed in advance so that the number of occurrences of activity wait can be reduced. Depending upon the activity process definition, the total turnaround time of activities can be shortened.

A specific activity may be defined and related to a preceding activity. In this case, the specific activity can be executed in advance by always monitoring the preceding activity under operation. The advanced start activity may be defined independently from a flow of a series of activities. It is therefore possible to simplify the activity process definition and the maintenance and operation of the workflow system.

According to the invention, depending upon the activity process definition, the total turnaround time of activities can be shortened.

## Claims

1. A workflow system for processing a transaction in accordance with an activity definition defining an order of activities for processing the transaction, comprising:
a monitor unit for monitoring a process state of a first activity which processes the transaction;
a judging unit for judging whether a second activity of the transaction can start, the second activity being defined by the activity definition; and
a control unit for notifying the second activity that the second activity can start, when said control unit receives information that the first activity is being processed, from said monitoring unit, and receives information that the second activity can start, from said judging unit. (Fig. 7)

2. A workflow system according to claim 1, wherein said judging unit stores a condition of starting the second activity.

3. A workflow system according to claim 1, wherein the second activity is an activity of canceling to process the transaction.

4. A workflow system according to claim 1, wherein the second activity is a pre-process for executing succeeding activities.

5. A workflow system according to claim 1, wherein the workflow system is a delivery system.

6. A method of processing a transaction with a computer in accordance with an activity definition defining an order of activities for processing the transaction, comprising the steps of:
monitoring a process state of a first activity which processes the transaction;
judging whether a second activity of the transaction can start, the second activity being defined by the activity definition; and
notifying the second activity that the second activity can start, if the first activity is being processed and the second activity can start.

7. A method according to claim 6, wherein whether the second activity can start is judged in accordance with a predetermined condition.

8. A method according to claim 6, wherein the second activity is an activity of canceling to process the transaction.

9. A method according to claim 6, wherein the second activity is a pre-process for executing succeeding activities.

10. A storage medium storing a program realizing a method of processing a transaction with a computer in accordance with an activity definition defining an order of activities for processing the transaction, the program comprising the steps of:
monitoring a process state of a first activity which processes the transaction;
judging whether a second activity of the transaction can start, the second activity being defined by the activity definition; and
notifying the second activity that the second activity can start, if the first activity is being processed and the second activity can start.

11. A storage medium storing a program according to claim 10, wherein whether the second activity can start is judged in accordance with a predetermined condition.

12. A program on a storage medium for realizing a method of processing a transaction with a computer in accordance with an activity definition defining an order of activities for processing the transaction, said program comprising the steps of:
monitoring a process state of a first activity which processes the transaction;
judging whether a second activity of the transaction can start, the second activity being defined by the activity definition; and
notifying the second activity that the second activity can start, if the first activity is being processed and the second activity can start.
